# EUROPEAN PATENT SPECIFICATION

(11) **EP 2 889 471 B1**
(45) Date of publication and mention of the grant of the patent: **20.10.2021**
(21) Application number: 13199790.0
(22) Date of filing: 30.12.2013
(51) Int. Cl.: F03D 13/20

(54) **Damping arrangement**
Dämpfungsanordnung
Agencement d'amortisseur

(43) Date of publication of application: 01.07.2015
(73) Proprietor: Siemens Gamesa Renewable Energy A/S, 7330 Brande (DK)
(72) Inventor: Mathiasen, Soeren Oestergaard, 7323 Give (DK)
(74) Representative: Aspacher, Karl-Georg

(56) References cited:
- WO-A1-99/32789
- WO-A1-2008/000265
- CN-U- 201 843 734
- CN-U- 203 272 029
- JP-A- 2003 176 774
- None

## Description

The invention relates to a damping arrangement for a wind turbine and a wind turbine comprising such a damping arrangement.

In a wind turbine, kinetic energy from the wind is converted into electrical energy. Wind farms comprising a large number of wind turbines are becoming an increasingly important source of renewable energy, wherein more and more wind farms are placed offshore and in particular further away from the shore where the water is deeper. Wind turbines typically include a drive train, a generator housed in a nacelle mounted on top of a tower. Wind energy, wave energy, and forces due to the rotation of the rotor's blades induce vibrations in the tower of the wind turbine. However the wave loading level acting on the tower significantly increases when the wind turbine is placed further offshore in deeper water. Wave loading is generally not a problem for a wind turbine located in shallow waters. However, for a wind turbine situated in deeper water, for example further out from the coast, wave loading increases significantly. The vibrations induced by the wave energy increase the fatigue load acting on the tower and the foundation of the wind turbine.

Offshore wind turbines can be equipped with damping arrangements which serve to dampen vibrations in the tower and thus to reduce the overall load impact acting on the tower and substructure. Existing damping arrangements can be active, passive or a combination of both. The systems are typically designed as mechanical or fluid systems, for example as disclosed in CN 201 843 734 U. However, the known damping arrangements are not able to provide a satisfactory damping effect for a wind turbine at an offshore location at which the wave loading is greater, for example in a deep water location.

It is therefore an object of the invention to provide an improved damping arrangement that avoids the problems mentioned above.

This object is achieved by a damping arrangement according to claim 1 and by a wind turbine according to claim 14.

According to the invention, a damping arrangement is realised for mounting inside a tower of a wind turbine and comprises a damper housing realised to contain a fluid, and wherein a diameter of the damper housing is greater than a radius of the tower at a mounting level of the damping arrangement close to the top of the tower; and an auxiliary damper arranged in a lower portion of the tower.

A damper housing in the context of the invention is a closed container at least partially filled with a fluid that is free to move. The damping arrangement according to the invention is therefore to be understood as a "mass damper", since the mass of the damper is used to counteract a motion of the tower in which it is mounted.

The shape of the damper housing is preferably adapted to the shape of the tower, e.g. a circular damping arrangement in a circular tower. In particular, a diameter of the damper housing is greater than a radius of the tower at a mounting level of the damping arrangement. The expression "radius" as used herein is to be understood in general as a distance between the longitudinal axis and an interior face of the tower, regardless of the cross-sectional shape of the tower. In case the tower has a circular cross-section, the radius is of course essentially constant. In this case, the damper housing is also essentially circular. The damper housing diameter can vary from being larger than the radius of the tower to being equal to the inner tower diameter at the mounting level in the tower. Preferably, the diameter of a circular damper housing is close to the diameter of the wind turbine tower.

In case the tower has e.g. an elliptical or a rectangular cross-section, the "radius" varies, so that the term "radius" can be understood as an average radius. The "diameter" of the damper housing should be understood as a measure for the extension of the damper housing across the cross-sectional area of the tower at the mounting level of the damper housing. For example the term "diameter" should designate the distance from a first point on an outer edge of the damper housing to a second, diametrically opposed point on the outer edge of the damper housing.

The mounting level of the damping arrangement, i.e. the position along the longitudinal axis of the tower at which the damping arrangement is mounted in the tower, may be selected according to the required damping properties of the damping arrangement. The damping requirements of the overall system may also serve as a basis from which to determine the quantity of fluid to be introduced into the damper housing. For example, by appropriately determining the quantity of fluid and/or by selecting the mounting level of the damping arrangement, the resonant frequency of the overall system, i.e. the resonant frequency of the wind turbine including the damping arrangement, may be adjusted as desired. In the context of the invention, the term "overall system" is to be understood as the wind turbine (including tower, nacelle, generator, etc.), the foundation, and the damping arrangement according to the invention. By choosing appropriate parameters for the damping arrangement - such as damper housing dimensions, fluid fill, mounting level, etc. - the damping arrangement can be 'tuned' to the damping requirements of the overall system at a certain location, for example for a particular wind turbine at a particular offshore location.

The damping arrangement may be used in any kind of wind turbine. Also the damping arrangement can be used in any kind of tower. This includes different tower design types like open framework constructions, solid constructions such as steel or concrete towers, or any other type of construction. The tower may be constructed of a variety of materials, including wood, concrete, steel, aluminium, fibre-reinforced material, etc. Furthermore, the tower in which the damping arrangement can be mounted may have any cross-sectional shape, e.g. circular, elliptical, rectangular etc. Along its longitudinal axis, the tower may have a constant or a varying cross-sectional shape. For example, the tower, along its longitudinal axis, may be tapered.

In the damping arrangement according to the invention, the damper housing is realised to contain a fluid that provides a damping action or damping effect when the damper arrangement is displaced as a result of loading forces acting on the tower and/or foundation. Mass dampers have a number of advantages over other kinds of damper. Besides being inexpensive to realise, the maintenance of mass dampers is also much cheaper than the maintenance of other dampers, e.g. spring dampers. Moreover, the damping characteristics of a mass damper can easily be adjusted according to the damping requirements of the system, e.g. by appropriately designing the geometry of the damper housing and by appropriately selecting the type and the amount of fluid introduced into the damper housing. In this way, the damping arrangement according to the invention can provide a cheap and effective way of avoiding an undesirable oscillation of the overall system.

The damping arrangement comprises an additional damper in a lower portion of the tower to augment the fluid-filled damper housing at the upper level of the tower. For example, an auxiliary mass damper may be arranged in a lower portion of the tower e.g. an auxiliary mass damper such as a fluid damper can comprise a number of smaller fluid-filled containers arranged at a common level. Placing such an auxiliary damper in a lower portion of the tower may enhance the overall damping efficiency particularly for very high towers and/or very deep offshore locations.

A wind turbine according to the invention comprises a damping arrangement as described above.

The damping arrangement according to the invention, with a damper housing having a diameter greater than a radius of the tower at a mounting level of the damping arrangement, can very efficiently dampen vibrations occurring in a wind turbine, particularly in an offshore location. Therefore in contrast to prior art construction and damping solutions, a wind turbine equipped with a damping arrangement according to the invention can be placed further offshore in deep water. Since the damping action of the damping arrangement according to the invention is very effective, an expensive additional reinforcement of the foundation and the tower of the wind turbine may not be necessary. Hence, considerable cost savings can be achieved.

Particularly advantageous embodiments and features of the invention are given by the dependent claims, as revealed in the following description. Features described in the context of one claim category can apply equally to another claim category. Features of the different claim categories may be combined as appropriate to arrive at further embodiments.

The damping arrangement can be mounted at any level in the tower. However, the damping effect of a tuned mass damper is related to the height at which it is mounted. Therefore, in a preferred embodiment of the invention, the damper housing of the damping arrangement may be realised for mounting essentially underneath a nacelle of the wind turbine. The position of the damper housing of the damping arrangement high up in the tower and close to the top of the tower enhances the damping effect of the damping arrangement.

The damping effect of a damper containing a fluid is related to the width of the damper as well as the level of the fluid in the damper. Generally a "wider" damper will have a more effective damping than an equivalent "narrow" damper. Therefore, in a preferred embodiment of the invention, the damper housing of the damping arrangement may have a diameter comprising at least 60%, preferably 70%, more preferably 80% and most preferably 90% of the tower diameter at the mounting level. A damping arrangement having a damper housing with a diameter in that range is characterized by a significant improvement in damping efficiency as compared to an arrangement based on the use of a plurality of smaller dampers arranged in a horizontal plane about a longitudinal axis of a wind turbine tower. In such an arrangement, a "smaller damper" is to be understood here as a fluid-filled mass damper with a diameter not exceeding the radius of the tower at the mounting level.

The yaw drive of a wind turbine is generally located between the top of the tower and the nacelle, and requires maintenance access. Therefore, in a particularly preferred embodiment of the invention, the damping arrangement may have a platform arranged above the damper housing to facilitate access to the yaw drive and other elements of the wind turbine. In such an arrangement, the tuned mass damper is mounted suitably high up in the tower. In particular, the platform and damper are "integrated", i.e. the upper surface of the damper housing acts as the platform. The platform in this case may be achieved by manufacturing the upper surface of the damper to give a surface that is suitable for walking on. Alternatively a platform surface can be attached or mounted to the top or upper surface of the damper housing, so that the integrated damper and platform can be handled as a single object. This is preferably done before installing the damper in the wind turbine tower.

A handrail may extend around a circumference of the platform for safety reasons. When the damping arrangement is mounted essentially underneath the nacelle of the wind turbine (with sufficient headroom), service personnel may easily and safely access a yaw drive of the wind turbine via the platform of the damping arrangement. Of course, the platform also makes it easier for service personnel to carry out other maintenance procedures, e.g. to add more fluid to the damper or to withdraw fluid should the need arise.

The structural stability of a fluid-filled container will generally depend on the geometry of the container, particularly when the fluid volume is large. Therefore, in a preferred embodiment of the damping arrangement, the damper housing comprises an essentially circular-cylindrical structure, since a round-walled construction absorbs forces equally well in all directions. With this very stable geometry, the damper housing is particularly suitable for mounting inside a tower having a circular cross-section.

A favourable fill level of the damping arrangement is determined under consideration of the overall system frequency, damper capacity and fluid characteristics, etc. A favourably effective fluid fill level might comprise at least 40%. To allow the fluid to move relatively freely within the container, some "headroom" is preferably provided by not completely filing the damper housing, for example by only filing the damper housing up to a maximum of 90%.

As indicated above, the structural stability of the damper housing is critical on account of the weight of the relatively large volume of fluid. Therefore, the damper housing is preferably made of a suitably strong material such as steel. It is, however, also conceivable to use any other appropriate material such as a fibre-reinforced material. Equally, the damper housing may have a multi-layered wall structure with an outer layer made of one material such as steel and an inner layer made of the same material or a different material such as a fibre-reinforced material.

Usually it is desirable for service personnel to be able to pass between nacelle and tower interior, for example to access the nacelle from the tower base or vice versa. To this end, the damper housing may be formed to include a passage through the damper housing. However, in a particularly preferred embodiment of the invention, the damper housing comprises at least one through-channel extending between an upper level of the damper housing and a lower level of the damper housing, for example between an upper housing surface and a lower housing surface. The through-channel may be dimensioned and located as desired. For example, such a through-channel may be large enough to provide personnel access.

A mass damper with such a through-channel extending vertically through its centre may resemble a torus or "doughnut". However, the damper housing may be realized to comprise more than one such through-channel. For example, in a preferred embodiment of the invention, the through-channel can be a cable channel realised to accommodate a cable arrangement. The cable channel may extend through the damper housing in any desired direction. Preferably, the cable channel extends vertically, essentially along the longitudinal axis of the tower. For example, such a cable channel can be arranged essentially about the centre of the cross-sectional area of the tower and preferably also about the centre of the damper housing. The cable channel allows a cable arrangement to extend through the damping arrangement, so that it is not necessary to alter the path of the cable arrangement to suit the damper housing, thus adding to the cost-effectiveness of the damping arrangement according to the invention.

As indicated above, the damping arrangement may have an access channel realised to accommodate a service access arrangement. The access channel may extend through the damper housing in any desired direction, for example vertically or sloped. Preferably, the access channel extends parallel to the longitudinal axis of the tower. The access channel can be offset from a centre of the cross-sectional area of the tower, and therefore also offset from a centre of the damper housing. The access channel gives service personnel the possibility to access a part of the tower arranged below the damper housing when entering the tower in a region above the damper housing, and to access a part of the tower arranged above the damper housing when entering the tower in a region below the damper housing. The service access arrangement may comprise a ladder, an elevator and the like.

The damping arrangement may comprise at least two through-channels extending between an upper housing surface and a lower housing surface, wherein a first through-channel is designed in the form of a cable channel realised to accommodate a cable arrangement, and wherein a second through-channel is designed in the form of an access channel realised to accommodate a service access arrangement. Of course, an access channel can be located "centrally" and a cable channel can be "offset". It is, however, also conceivable to provide the damping arrangement with a single through-channel which is designed in the form of a combined cable and access channel realised to accommodate both a cable arrangement and a service access arrangement. Such an embodiment is easier to manufacture and has uniform damping characteristics.

In a wind turbine with a height in the range of 90 m and an upper radius of about 4.0 m, the damper housing may have a volume of at least 3.0 m³, more preferably at least 4.0 m³, most preferably at least 6.0 m³. The damper housing of the damping arrangement may be at least partially filled with a damping fluid to 40%, as indicated above, or may be almost entirely filled, for example by about 90 %.

The damping fluid can be water, another fluid, or a mixture of suitable fluids. Preferably, the damping fluid comprises glycol, in particular ethylene glycol. A substance such as glycol lowers the freezing point of a damping fluid such as water, thus ensuring that the damping fluid remains liquid also at temperatures below freezing.

When loading forces act on the tower and foundation, the liquid in the damper moves from side to side, and the height of the resulting "waves" can increase to an undesirable level and might even counteract the damping effect. Therefore, the damping arrangement preferably comprises at least one baffle arranged within the housing. A baffle is generally a vertical element extending from the base of the damping housing towards the top. Such a baffle serves as a flow directing and/or flow deflecting element to influence and slow down the flow of the damping fluid within the damper housing. A baffle can comprise a perforated surface area i.e. a surface area with a plurality of holes. A baffle having such a perforated surface area allows fluid to pass through the holes, thus reducing the velocity of the damping fluid. Equally, a baffle can comprise a wire mesh or similar element for stabilising fluid flow in the damper. One or more baffles can be arranged at suitable locations in the damper housing. For example, the baffle may extend substantially parallel to a circumferential surface of the damper housing. A suitable arrangement of one or more baffles can favourably enhance the efficiency of the fluid damper.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a schematic representation of a wind turbine comprising a damping arrangement according to an embodiment of the invention.
Fig. 2 shows a schematic representation of the damping arrangement installed in the wind turbine of Fig. 1.
Fig. 3 shows a plan view of the damping arrangement of Fig. 2.

In the drawings, like reference numbers refer to like objects throughout. Objects in the diagrams are not necessarily drawn to scale.

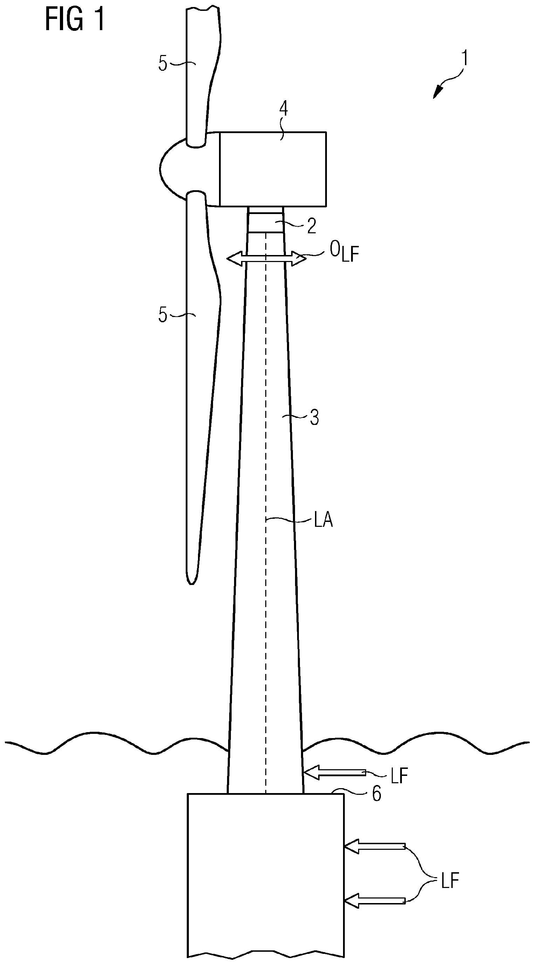

Fig. 1 shows a schematic representation of a wind turbine 1 with a damping arrangement 2 according to the invention. The wind turbine comprises a tower 3, a nacelle 4 and a number of rotor blades 5. The tower is mounted on a foundation 6, and both tower and foundation can be subject to wave loading forces LF as indicated by the arrows, which, in a prior art wind turbine that does not have a damping arrangement according to the invention, would otherwise result in tower oscillations O_{LF} as indicated by the arrow in an upper level of the tower 3. Such oscillations O_{LF} should be avoided since they may result in fatigue damage to various elements of the wind turbine 1.

The tower 3 has a circular cross-section, wider at the base and narrower at the top. As compared to conventional wind turbines, the wind turbine 1 as shown is intended to be placed further offshore in deep water resulting in a significantly greater wave loading forces acting on the foundation 6 and/or wind turbine tower 3.

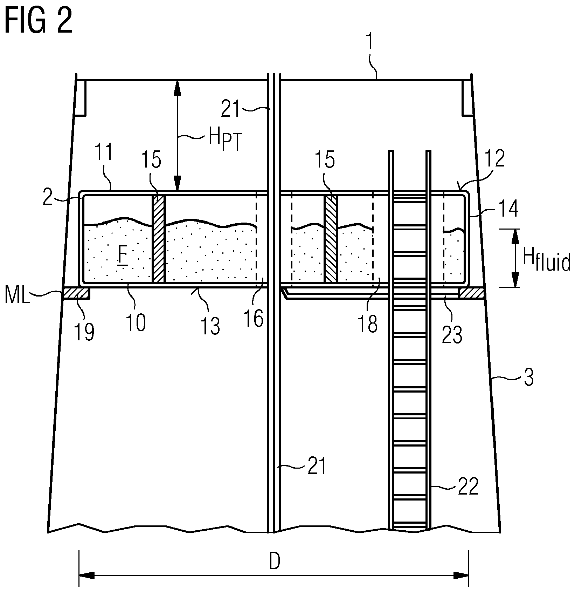

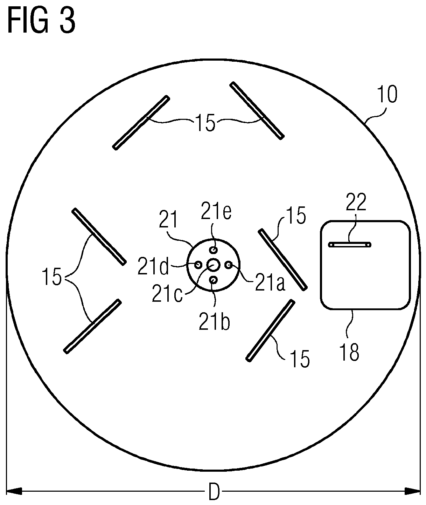

The damping arrangement 2 according to the invention is essentially arranged below the nacelle 4 in an upper part of the tower 3. The damping arrangement 2 of Fig. 1 is shown in greater detail in Figs. 2 and 3. In this exemplary embodiment, the damping arrangement 2 comprises a damper housing 10 with an essentially cylindrical structure comprising an upper surface 12, a lower surface 13, and a cylindrical wall 14. The damper housing is realised to allow enough "headroom" between the fluid and the upper housing surface 12. The ratio of housing diameter D to fluid height H_{fluid} in the damper is approximately 10:1 (the diagram is not to scale) to obtain a satisfactory damping effect.

In this embodiment the diameter D of the damper housing 10 comprises approximately 90% of the radius of the tower 3 at the mounting level ML. The damper housing 10 is mounted in the tower 3 by means of a mounting means 19 at a mounting level ML. The mounting means 19 can be a flange 19 or other support suitable for bearing the weight of the damping arrangement 2. The "mounting level" ML is to be understood as the height of the tower 3 at which the damper housing 10 is fixed to the tower 3.

The damper housing 10 is an essentially closed container 10 realised to contain a damping fluid F, and the fluid F can be introduced into the container 10 before the tower is lifted into place during an assembly stage. In the embodiment of a damping arrangement 2 shown in Figs. 2 and 3, the damping fluid F can comprise glycol. Furthermore, as shown in Fig. 2, the damping arrangement 2 comprises a number of baffles 15 arranged within the damper housing 10. The baffles 15 in this embodiment are arranged essentially parallel to the wall 14 of the damper housing 10 and comprise vertical elements with a perforated surface area. The baffles 15 have the effect of reducing the velocity of the damping fluid F in the damper. In this way, any "waves" that are created in the fluid on account of loading forces acting on the tower and/or foundation are kept to a favourable low height or are broken up before they can reinforce each other. This is ensured by appropriate design of the baffles.

Fig. 2 illustrates a preferred realisation of the damping arrangement according to the invention, in which a platform 11 is arranged above the damper housing 10. In this embodiment, the platform 11 is formed integrally with the damper housing 10, i.e. the upper surface 12 of the damper housing 10 acts as a platform 11 for service personnel. The damping arrangement is mounted on a suitable structural element such a flange at a mounting level ML which is chosen to allow a suitable height H_{PT} between the platform and the upper level of the tower, so that service personnel can comfortably access elements of a yaw drive located at the top of the tower.

Furthermore, the damper housing 10 comprises two vertical through-channels 16, 18 extending through the damper housing 10. In the plan view given by Fig. 3, one of the through-channels 16 is realised in the form of a cable channel 16 adapted to accommodate a cable arrangement 21, and another through-channel 18 is realised as an access channel 18. In Fig. 3, the cable arrangement 21 is shown to comprise a number of cable bundles 21a-e extending vertically through the cylindrical cable channel 16.

The other through-channel 18 is realised in the form of an access channel 18 adapted to accommodate an access means 22 for service personnel. In the embodiment of the damping arrangement 2 shown in Figs. 2 and 3, the access means 22 is a ladder 22 extending through the access channel 18 and giving service personnel the means to access a region of the tower 3 arranged below the damper housing 10 when entering the tower 3 in a region above the damper housing 10, and to access a region of the tower 3 arranged above the damper housing 10, in particular the platform 11 and yaw drive and nacelle, when entering the tower 3 in a region below the damper housing 10. Since the damper housing 10 is placed essentially below the nacelle of the wind turbine 1, the platform 11 can be used for accessing the yaw drive for example for service and maintenance.

Underneath the lower surface 13, a leakage tray 23 is fixed below the damper housing 10 so as to collect any fluid leakage from the damper housing 10. Any fluid leakage from the damper can then easily be detected by monitoring the contents of the leakage tray.

Although the present invention has been disclosed in the form of preferred embodiments and variations thereon, it will be understood that numerous additional modifications and variations could be made thereto without departing from the scope of the invention. For example, the shape of the damper housing can be adapted to any non-circular tower shape.

For the sake of clarity, it is to be understood that the use of "a" or "an" throughout this application does not exclude a plurality, and "comprising" does not exclude other steps or elements.

## Claims

1. Damping arrangement (2) of a wind turbine (1) comprising a generator housed in a nacelle (4) mounted on top of a tower (3), which damping arrangement (2) is realised for mounting inside the tower (3) and comprises
- a damper housing (10) realised to contain a fluid (F), and wherein a diameter (D) of the damper housing (10) is greater than a radius (R) of the tower (3) at a mounting level (ML) of the damping arrangement close to the top of the tower (3); **characterized in that** it comprises
- an auxiliary damper arranged in a lower portion of the tower (3).

2. Damping arrangement according to claim 1, realised for mounting at a mounting level (ML) underneath a nacelle (4) of the wind turbine (1).

3. Damping arrangement according to claim 1 or 2, wherein the diameter (D) of the damper housing (10) comprises at least 80% of an inner tower diameter (D) at the mounting level (ML) .

4. Damping arrangement according to any of the preceding claims, comprising a platform (11) arranged above the damper housing (10).

5. Damping arrangement according to any of the preceding claims, wherein the damper housing (10) has an essentially cylindrical structure.

6. Damping arrangement according to any of the preceding claims, wherein the damper housing (10) comprises at least one through-channel (16; 18) extending between an upper housing surface (12) and a lower housing surface (13).

7. Damping arrangement according to claim 6, comprising a cable channel (16) realised to accommodate a cable arrangement (21) .

8. Damping arrangement according to claim 6, comprising an access channel (18) realised to accommodate a service access arrangement (22).

9. Damping arrangement according to any of the preceding claims, wherein the damper housing (10) is at least partially filled with a damping fluid (F).

10. Damping arrangement according to claim 9, wherein the damping fluid comprises glycol.

11. Damping arrangement according to any of the preceding claims, comprising at least one baffle (15) arranged within the housing (10).

12. Damping arrangement according to claim 11, wherein a baffle (15) comprises a perforated surface area (20).

13. Damping arrangement according to any of the preceding claims, wherein the damper housing (10) is realised to contain a fluid volume of at least 3.0 m³, more preferably at least 4.0 m³, most preferably at least 6.0 m³.

14. Wind turbine (1) comprising a damping arrangement according to any of claims 1 to 13.

15. A method of equipping a wind turbine (1) with a damping arrangement (2) according to any of claims 1 to 13, wherein the wind turbine (1) comprises a generator housed in a nacelle (4) mounted on top of a tower (3), and wherein the method comprises the steps of
- fixing the damper housing (10) of the damping arrangement (2) to the tower (3) at a mounting level (ML) close to the top of the tower (3); and
- arranging the auxiliary damper in a lower portion of the tower (3).

## Patentansprüche

1. Dämpfungsanordnung (2) für eine Windenergieanlage (1) mit einem Generator, der in einer an der Spitze eines Turms (3) befestigten Gondel (4) untergebracht ist, wobei die Dämpfungsanordnung (2) zum Einbauen in den Turm (3) vorgesehen ist und Folgendes umfasst:
- ein Dämpfergehäuse (10), das zum Aufnehmen eines Fluids (F) vorgesehen ist, und wobei ein Durchmesser (D) des Dämpfergehäuses (10) größer ist als ein Radius (R) des Turms (3) in Einbauhöhe (ML) der Dämpfungsanordnung in der Nähe der Spitze des Turms (3), **dadurch gekennzeichnet, dass** sie Folgendes umfasst:
- einen Hilfsdämpfer, der in einem unteren Abschnitt des Turms (3) angeordnet ist.

2. Dämpfungsanordnung nach Anspruch 1, die zum Einbauen in einer Einbauhöhe (ML) unterhalb einer Gondel (4) der Windenergieanlage (1) vorgesehen ist.

3. Dämpfungsanordnung nach Anspruch 1 oder 2, wobei der Durchmesser (D) des Dämpfergehäuses (10) mindestens 80% eines Turminnendurchmessers (D) in Einbauhöhe (ML) beträgt.

4. Dämpfungsanordnung nach einem der vorhergehenden Ansprüche, die eine Plattform (11) umfasst, welche oberhalb des Dämpfergehäuses (10) angeordnet ist.

5. Dämpfungsanordnung nach einem der vorhergehenden Ansprüche, wobei das Dämpfergehäuse (10) einen im Wesentlichen zylinderförmigen Aufbau aufweist.

6. Dämpfungsanordnung nach einem der vorhergehenden Ansprüche, wobei das Dämpfergehäuse (10) mindestens einen Durchgangskanal (16; 18) umfasst, der zwischen einer oberen Gehäusefläche (12) und einer unteren Gehäusefläche (13) verläuft.

7. Dämpfungsanordnung nach Anspruch 6, die einen Kabelkanal (16) umfasst, der zum Aufnehmen einer Kabelanordnung (21) vorgesehen ist.

8. Dämpfungsanordnung nach Anspruch 6, die einen Zugangskanal (18) umfasst, der zum Aufnehmen einer Wartungszugangsanordnung (22) vorgesehen ist.

9. Dämpfungsanordnung nach einem der vorhergehenden Ansprüche, wobei das Dämpfergehäuse (10) zumindest teilweise mit einem Dämpfungsfluid (F) gefüllt ist.

10. Dämpfungsanordnung nach Anspruch 9, wobei das Dämpfungsfluid Glycol umfasst.

11. Dämpfungsanordnung nach einem der vorhergehenden Ansprüche, die mindestens eine Trennwand (15) umfasst, welche in dem Gehäuse (10) angeordnet ist.

12. Dämpfungsanordnung nach Anspruch 11, wobei eine Trennwand (15) einen perforierten Oberflächenbereich (20) umfasst.

13. Dämpfungsanordnung nach einem der vorhergehenden Ansprüche, wobei das Dämpfergehäuse (10) zum Aufnehmen eines Fluidvolumens von mindestens 3,0 m³, bevorzugt mindestens 4,0 m³, besonders bevorzugt mindestens 6,0 m³ vorgesehen ist.

14. Windenergieanlage (1) mit einer Dämpfungsanordnung nach einem der Ansprüche 1 bis 13.

15. Verfahren zum Ausstatten einer Windenergieanlage (1) mit einer Dämpfungsanordnung (2) nach einem der Ansprüche 1 bis 13, wobei die Windenergieanlage (1) einen Generator umfasst, der in einer an der Spitze eines Turms (3) befestigten Gondel (4) untergebracht ist, und das Verfahren folgende Schritte umfasst:
- Fixieren des Dämpfergehäuses (10) der Dämpfungsanordnung (2) in einer Einbauhöhe (ML) in der Nähe der Spitze des Turms (3) an dem Turm (3) und
- Anordnen des Hilfsdämpfers in einem unteren Abschnitt des Turms (3).

## Revendications

1. Agencement d'amortissement (2) d'une éolienne (1) comprenant un générateur logé dans une nacelle (4) montée au sommet d'une tour (3), lequel agencement d'amortissement (2) est réalisé pour être monté à l'intérieur de la tour (3) et comprend
- un logement d'amortisseur (10) réalisé pour contenir un fluide (F), et dans lequel un diamètre (D) du logement d'amortisseur (10) est plus grand qu'un rayon (R) de la tour (3) à un niveau de montage (ML) de l'agencement d'amortissement à proximité du sommet de la tour (3) ;
**caractérisé en ce qu'**il comprend :
- un amortisseur auxiliaire agencé dans une partie inférieure de la tour (3).

2. Agencement d'amortissement selon la revendication 1, réalisé pour être monté à un niveau de montage (ML) au-dessous d'une nacelle (4) de l'éolienne (1).

3. Agencement d'amortissement selon la revendication 1 ou 2, dans lequel le diamètre (D) du logement d'amortisseur (10) comprend au moins 80 % d'un diamètre de tour interne (D) au niveau de montage (ML).

4. Agencement d'amortissement selon l'une quelconque des revendications précédentes, comprenant une plate-forme (11) agencée au-dessus du logement d'amortisseur (10).

5. Agencement d'amortissement selon l'une quelconque des revendications précédentes, dans lequel le logement d'amortisseur (10) comporte une structure essentiellement cylindrique.

6. Agencement d'amortissement selon l'une quelconque des revendications précédentes, dans lequel le logement d'amortisseur (10) comprend au moins un canal traversant (16 ;
18) s'étendant entre une surface de logement supérieure (12) et une surface de logement inférieure (13).

7. Agencement d'amortissement selon la revendication 6, comprenant un canal de câble (16) réalisé pour recevoir un agencement de câble (21).

8. Agencement d'amortissement selon la revendication 6, comprenant un canal d'accès (18) réalisé pour recevoir un agencement d'accès de service (22).

9. Agencement d'amortissement selon l'une quelconque des revendications précédentes, dans lequel le logement d'amortisseur (10) est au moins partiellement rempli d'un fluide d'amortissement (F).

10. Agencement d'amortissement selon la revendication 9, dans lequel le fluide d'amortissement comprend du glycol.

11. Agencement d'amortissement selon l'une quelconque des revendications précédentes, comprenant au moins une chicane (15) agencée à l'intérieur du logement (10).

12. Agencement d'amortissement selon la revendication 11, dans lequel une chicane (15) comprend une aire surfacique perforée (20).

13. Agencement d'amortissement selon l'une quelconque des revendications précédentes, dans lequel le logement d'amortisseur (10) est réalisé pour contenir un volume de fluide d'au moins 3,0 m³, de façon davantage préférable, d'au moins 4,0 m³ et de la façon la plus préférable, d'au moins 6,0 m³.

14. Éolienne (1) comprenant un agencement d'amortissement selon l'une quelconque des revendications 1 à 13.

15. Procédé pour munir une éolienne (1) d'un agencement d'amortissement (2) selon l'une quelconque des revendications 1 à 13, dans lequel l'éolienne (1) comprend un générateur logé dans une nacelle (4) montée au sommet d'une tour (3), et dans lequel le procédé comprend les étapes constituées par :
- la fixation du logement d'amortisseur (10) de l'agencement d'amortissement (2) sur la tour (3) à un niveau de montage (ML) à proximité du sommet de la tour (3) ; et
- l'agencement de l'amortisseur auxiliaire dans une partie inférieure de la tour (3).
